(19) Europäisches Patentamt
European Patent Office
Office européen des brevets

(11) **EP 4 759 487 A1**

(12) **EUROPEAN PATENT APPLICATION**
published in accordance with Art. 153(4) EPC

(43) Date of publication:
17.06.2026 Bulletin 2026/25

(21) Application number: 24889003.0

(22) Date of filing: 27.10.2024

(51) International Patent Classification (IPC):
*B25J 5/00* (2006.01)     *B25J 13/08* (2006.01)
*B62D 61/12* (2006.01)     *B62D 57/028* (2006.01)
*G05D 1/246* (2024.01)

(52) Cooperative Patent Classification (CPC):
B25J 5/00; B25J 13/08; B62D 57/028; B62D 61/12

(86) International application number:
PCT/KR2024/016489

(87) International publication number:
WO 2025/100814 (15.05.2025 Gazette 2025/20)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 07.11.2023 KR 20230152904
27.02.2024 KR 20240027771

(71) Applicant: Samsung Electronics Co., Ltd.
Suwon-si, Gyeonggi-do 16677 (KR)

(72) Inventors:
• PARK, Jaehyun
  Suwon-si, Gyeonggi-do 16677 (KR)
• KIM, Minsong
  Suwon-si, Gyeonggi-do 16677 (KR)
• BANG, Heyunmoon
  Suwon-si, Gyeonggi-do 16677 (KR)
• SOUK, Hyunchul
  Suwon-si, Gyeonggi-do 16677 (KR)

(74) Representative: Gulde & Partner
Patent- und Rechtsanwaltskanzlei mbB
Berliner Freiheit 2
10785 Berlin (DE)

(54) **ELECTRONIC DEVICE FOR CHANGING OPERATION MODE WHILE MAINTAINING MOVING SPEED, AND METHOD FOR CONTROLLING SAME**

(57)    An electronic device is disclosed. The electronic device comprises: a memory in which map information including an operation mode for each area is stored; multiple wheels; a driving unit for controlling the multiple wheels; and at least one processor connected to the memory and the driving unit to control the electronic device. The processor may identify the position of the electronic device, identify, on the basis of the map information, an operation mode corresponding to the identified position from among a first operation mode for driving some of the multiple wheels and a second operation model for driving all of the multiple wheels, and control the driving unit on the basis of the identified operation mode.

## FIG. 1

# Description

[Technical Field]

This disclosure relates to an electronic device and a control method thereof, and particularly to, an electronic device changing an operation mode while maintaining a movement speed and a control method thereof.

[Background Art]

With an advancement in the electronic technologies, electronic devices providing various functions have been developed. In particular, various types of mobile robots have been recently provided, enhancing user convenience.

However, in the case where the operation mode of a conventional mobile robot is changed, the mobile robot needs to be stopped to change the operation mode. For example, the mode of a mobile robot such as a wheelchair may be changed from a first operation mode in which wheels are used to a second operation mode in which chains are used based on an obstacle being detected, and at this time, the mobile robot needs to be stopped to change the mode, causing inconvenience to the user.

[Disclosure of Invention]

[Solution to Problem]

According to one embodiment for achieving the above objective, an electronic device may include memory storing map information including an operation mode for each area, a plurality of wheels, a driving unit controlling the plurality of wheels, and one or more processors connected to the memory and the driving unit to control the electronic device, and the processors may identify a position of the electronic device, identify, based on the map information, an operation mode corresponding to the identified position out of a first operation mode of driving some of the plurality of wheels and a second operation mode of driving all of the plurality of wheels, and control, based on the identified operation mode, the driving unit.

Additionally, the electronic device may further include a sensor detecting torque of at least one of the plurality of wheels, and the processors may change, based on torque detected through the sensor being increased to a value greater than or equal to a threshold value while controlling the driving unit in the first operation mode, the first operation mode to the second operation mode to control the driving unit.

Additionally, the processors may change, based on torque detected through the sensor being decreased to a value less than the threshold value after a change to the second operation mode and an operation in the second operation mode, the second operation mode to the first operation mode to control the driving unit.

Additionally, the processors may change the first operation mode to the second operation mode, and update, based on a position at which the operation mode is changed, the map information.

Additionally, the plurality of wheels may include a pair of first wheels disposed forward with respect to a center of the electronic device and a pair of second wheels disposed rearward with respect to a center of the electronic device, and the processors may control, based on the electronic device being in the first operation mode, the driving unit to drive one of the first wheel(s) and the second wheel(s), and control, based on the electronic device being in the second operation mode, the driving unit to drive all of the first wheel(s) and the second wheel(s).

Additionally, the driving unit may include a first driving unit rotating the plurality of wheels, a second driving unit moving the first wheels up and down relative to the electronic device with respect to a pivot and a third driving unit moving the second wheels back and forth relative to the electronic device, and the processors may control, based on the electronic device being in the first operation mode, the second driving unit to lift and space the first wheels from a driving surface, control the third driving unit to move the second wheels to a center of the electronic device, and control the first driving unit to drive the second wheels, and may control, based on the electronic device being in the second operation mode, the second driving unit to contact the first wheels with a driving surface, control the third driving unit to move the second wheels to a rear of the electronic device, and control the first driving unit to drive the first wheels and the second wheels.

Additionally, the processors may control the first driving unit to maintain a speed of the electronic device by increasing a speed of the first wheels and decreasing a speed of the second wheels while the electronic device is changed from the first operation mode to the second operation mode, and control the first driving unit to maintain a speed of the electronic device by decreasing a speed of the first wheels and increasing a speed of the second wheels while the electronic device is changed from the second operation mode to the first operation mode.

Additionally, the processors may control, based on an operation mode of the electronic device being changed, the first driving unit to change a speed of the first wheels and a speed of the second wheels according to a speed of the electronic device, an angular velocity at which the first wheels are moved up and down with respect to the pivot, a speed at which the second wheels are moved to a front and rear of the electronic device.

Further, the electronic device may further include a plurality of auxiliary wheels, and the plurality of auxiliary wheels may contact the driving surface in the first operation mode, and be spaced from the driving surface in the second operation mode.

Furthermore, the processors may control, based on a position of the electronic device being a predetermined position, the processors 140 may control the driving unit to rotate the electronic device such that the second wheels are driven in a way that at least one of a rotation speed or a rotation direction of each of the second wheels differs.

Meanwhile, according to one embodiment, a control method of an electronic device may include identifying a position of the electronic device, identifying, based on map information including an operation mode for each area, an operation mode corresponding to the identified position out of a first operation mode of driving some of a plurality of wheels included in the electronic device and a second operation mode of driving all of the plurality of wheels, and controlling, based on the identified operation mode, a driving unit included in the electronic device to control the plurality of wheels.

Additionally, the method may further include detecting torque of at least one of the plurality of wheels, and changing, based on the torque being increased to a value greater than or equal to a threshold value while controlling the driving unit in the first operation mode, the first operation mode to the second operation mode to control the driving unit.

Additionally, the method may further include changing, based on the torque being decreased to a value less than the threshold value after a change to the second operation mode and an operation in the second operation mode, the second operation mode to the first operation mode to control the driving unit.

Additionally, the method may further include changing the first operation mode to the second operation mode, and updating, based on a position at which the operation mode is changed, the map information.

Additionally, the plurality of wheels may include a pair of first wheels disposed forward with respect to a center of the electronic device, and a pair of second wheels disposed rearward with respect to a center of the electronic device, and the controlling may include controlling, based on the electronic device being in the first operation mode, the driving unit to drive one of the first wheel(s) and the second wheel(s), and controlling, based on the electronic device being in the second operation mode, the driving unit to drive all of the first wheel(s) and the second wheel(s).

Additionally, the driving unit may include a first driving unit rotating the plurality of wheels, a second driving unit moving the first wheels up and down relative to the electronic device with respect to a pivot and a third driving unit moving the second wheels back and forth relative to the electronic device, and the controlling may include controlling, based on the electronic device being in the first operation mode, the second driving unit to lift and space the first wheels from a driving surface, controlling the third driving unit to move the second wheels to a center of the electronic device, and controlling the first driving unit to drive the second wheels, and may controlling, based on the electronic device being in the second operation mode, the second driving unit to contact the first wheels with a driving surface, controlling the third driving unit to move the second wheels to a rear of the electronic device, and controlling the first driving unit to drive the first wheels and the second wheels.

Additionally, the controlling may include controlling the first driving unit to maintain a speed of the electronic device by increasing a speed of the first wheels and decreasing a speed of the second wheels while the electronic device is changed from the first operation mode to the second operation mode, and controlling the first driving unit to maintain a speed of the electronic device by decreasing a speed of the first wheels and increasing a speed of the second wheels while the electronic device is changed from the second operation mode to the first operation mode.

Additionally, the controlling may include controlling, based on an operation mode of the electronic device being changed, the first driving unit to change a speed of the first wheels and a speed of the second wheels according to a speed of the electronic device, an angular velocity at which the first wheels are moved up and down with respect to the pivot, a speed at which the second wheels are moved to a front and rear of the electronic device.

Further, the electronic device may further include a plurality of auxiliary wheels, and the plurality of auxiliary wheels may contact the driving surface in the first operation mode, and be spaced from the driving surface in the second operation mode.

Furthermore, the controlling may include controlling, based on a position of the electronic device being a predetermined position, the processors 140 may control the driving unit to rotate the electronic device such that the second wheels are driven in a way that at least one of a rotation speed or a rotation direction of each of the second wheels differs.

[Brief Description of Drawings]

FIG. 1 is a block diagram illustrating a configuration of an electronic device according to one embodiment;

FIG. 2 is a block diagram illustrating a specific configuration of an electronic device according to one embodiment;

FIG. 3 is a view provided to explain a structure of an electronic device according to one embodiment;

FIG. 4 is a view provided to explain a method of obtaining map information according to one embodiment;

FIG. 5 is a view provided to explain a change in shapes based on an operation mode of an electronic device according to one embodiment;

FIG. 6 is a view provided to explain an operation of changing an operation mode while maintaining a driving speed of an electronic device according to one embodiment;

FIG. 7 is a flowchart provided to explain a method of identifying an operation mode of an electronic device according to one embodiment;

FIG. 8 is a flowchart provided to explain a method of changing an operation mode of an electronic device according to one embodiment; and

FIG. 9 is a flowchart provided to explain a control method of an electronic device according to one embodiment.

[Mode for Invention]

The objective of the disclosure is to provide an electronic device that changes an operation mode while maintaining a movement speed, and a control method thereof.

Various embodiments set forth herein and terms used herein are not intended to limit technical features of the subject matter of the disclosure to those of specific embodiments thereof, and it is to be understood that the embodiments set forth herein include various modifications, equivalents or alternatives thereof.

In describing the drawings, like reference numerals may be used to indicate like or relevant elements.

Unless explicitly stated otherwise, a singular form corresponding to an item may include a singular item or plural items.

In the disclosure, phrases such as "A or B," "at least one of A and B," "at least one of A or B," "A, B or C," "at least one of A, B and C," and "at least one of A, B, or C" may respectively include any one or all possible combinations of the items listed together in the phrases.

In the disclosure, a term such as "1st," "2nd," or "first," or "second" may be used merely to differentiate one element from another but not to limit the elements in another aspect (e.g., importance or order).

Based on one element (e.g., a first element) referred to as being "coupled with/to or connected with/to" another element (e.g., a second element) with or without the term "functionally" or "communicatively", it is to be understood that one element may be connected to another element directly (e.g., in a wired manner), in a wireless manner, or through yet another element (e.g., a third element).

Terms such as "include," or "have" and the like are used to indicate the presence of stated features, numbers, steps, operations, elements, parts or a combination thereof, and do not imply exclusion of the presence or addition of one or more different features, numbers, steps, operations, elements, parts or a combination thereof.

Based on one element referred to as being "connected with/to," "coupled with/to," "supporting," or "contacting" another element, it is to be understood that one element is connected with/to another element, is coupled with/to another element, supports another element, or contacts another element directly or indirectly through a third element.

Based on one element referred to as being placed "on" another element, it is to be understood that one element contacts another element and that yet another element is present between the two elements.

The term "and/or" includes a combination of a plurality of stated relevant elements or any of the plurality of stated relevant elements.

Hereafter, the operation mechanism and embodiments of the matter of the disclosure are described with reference to the drawings.

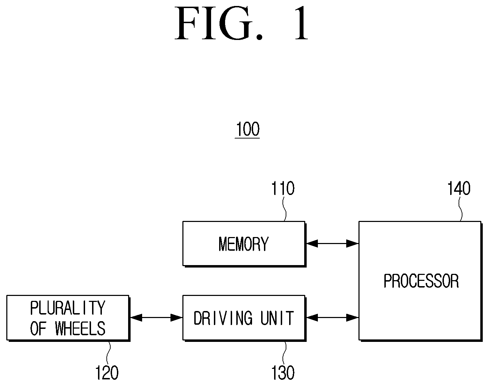

FIG. 1 is a block diagram illustrating a configuration of an electronic device 100 according to one embodiment.

The electronic device 100 may be a device providing a plurality of operation modes. For example, the electronic device 100 may be a mobile robot providing the plurality of operation modes. Herein, the plurality of operation modes may include a mode associated with a driving method of the electronic device 100. For example, the plurality of operation modes may include a two-wheel operation mode and a four-wheel operation mode.

However, the electronic device 100 may not be limited thereto and may be any device as long as the device provides the plurality of operation modes. Additionally, the plurality of operation modes may be implemented in various different ways as long as the modes are associated with the driving method.

Referring to FIG. 1, the electronic device 100 includes memory 110, a plurality of wheels 120, a driving unit 130 and a processor 140. However, the electronic device 100 may not be limited thereto, and may be implemented in the way that some elements of the electronic device 100 are excluded.

The memory 110 may refer to hardware that stores information such as data and the like in an electricity form or in a magnetism form such that the processor 140 and the like accesses the information. To this end, the memory 110 may be implemented as at least one hardware among non-volatile memory, volatile memory, flash memory, a hard disc drive (HDD) or a solid state drive (SSD), RAM, ROM and the like.

At least one instruction required for operations of the electronic device 100 or the processor 140 may be stored in the memory 110. Herein, the instruction, as a code unit commanding an operation of the electronic device 100 or the processor 140, may be written in machine language that is a language understandable by a computer. Alternatively, the memory 110 may store a plurality of instructions for performing a specific task of the electronic device 100 or the processor 140, as an instruction set.

The memory 110 may store data that are information of a bit unit or a byte unit capable of representing letters, numbers, images and the like. For example, the memory 110 may store map information including an operation mode for each area, and the like. Herein, the map information may include a map obtained based on a simultaneous localization and mapping (SLAM) method and an operation mode for each area in the map. The SLAM method may be a method involving creating a surrounding environment map through at least one sensor, and simultaneously estimating the position of a device in the map. However, the map may not be limited thereto, and may be obtained in any other way. The operation mode for each area may be determined under predetermined conditions. For example, the predetermined conditions may include a condition in which a normal area is set to a first operation mode, a condition in which an area including a slant section in an indoor space is set to a second operation mode, and the like, and the processor 140 may obtain an operation mode for each area from the map based on the predetermined conditions, to obtain map information. However, obtaining map information may not be limited thereto, and may involve obtaining a map and an operation mode for each area to obtain map information, and providing the map information to the electronic device 100 by a server.

The memory 110 may be accessed by the processor 140, and the processor 140 may perform reading/recording/correcting/deleting/updating and the like of an instruction, an instruction set, or data.

The plurality of wheels 120 may be elements for moving the position of the electronic device 100. For example, the plurality of wheels 120 may include a pair of first wheels that are disposed forward with respect to the center of the electronic device 100 and a pair of second wheels that are disposed rearward with respect to the center of the electronic device 100. However, the plurality of wheels 120 may not be limited thereto, and may be implemented at any other position in various different forms.

The driving unit 130 may include an element for controlling each of the plurality of wheels 120 under the control of the processor 140. For example, the driving unit 130 may be implemented as a motor and the like, to rotate the plurality of wheels 120. Herein, the driving unit 130 may rotate the plurality of wheels 120 in an identical manner, and also rotate the plurality of wheels 120 in a different manner.

Alternatively, the driving unit 130 may also include an element for changing the position of the plurality of wheels 120.

However, the driving unit 130 may not be limited thereto, and may be any element as long as the element controls the plurality of wheels 120.

The processor 140 controls the operations of the electronic device 100 entirely. In detail, the processor 140 may be connected with each of the elements of the electronic device 100 to control the operations of the electronic device 100 entirely. For example, the processor 140 may be connected to an element such as the memory 110, the driving unit 130 and the like, to control the operations of the electronic device 100.

One or more processors 140 may include one or more of a central processing unit (CPU), a graphics processing unit (GPU), an accelerated processing unit (APU), many integrated core (MIC), a digital signal processor (DAP), a neural processing unit (NPU), a hardware accelerator or a machine learning accelerator. The one or more processors 140 may control one among other elements of the electronic device 100 or any combination thereof, and perform an operation in association with communication or data processing. The one or more processors 140 may execute one or more programs or instructions stored in the memory 110. For example, the one or more processors 140 may execute one or more instructions stored in the memory 110, to perform a method according to one embodiment.

In the case where the method according to one embodiment includes a plurality of operations, the plurality of operations may be performed by one processor, or by a plurality of processors. For example, when the first operation, the second operation, and the third operation are performed based on the method according to one embodiment, the first operation, the second operation and the third operation may all be performed by a first processor, or the first operation and the second operation may be performed by the first processor (e.g., a generic-purpose processor), while the third operation may be performed by a second processor (e.g., an AI-oriented processor).

The one or more processors 140 may be implemented as a single core processor including one core, or one or more multicore processors including a plurality of cores (e.g., a homogeneous multi core or a heterogeneous multi core). In the case where the one or more processors 140 are implemented as a multicore processor, each of the plurality of cores included in the multicore processor may include processor internal memory such as cache memory, and on-chip memory, and common cache shared by the plurality of cores may be included in the multicore processor. Additionally, each of the plurality of cores (or some of the plurality of cores) included in the multicore processor may read and perform a program instruction for implementing the method according to one embodiment independently, or may read and perform a program instruction for implementing the method according to one embodiment in the way that all (or part) of the plurality of cores are associated.

In the case where the method according to one embodiment includes a plurality of operations, the plurality of operations may be performed by one of the plurality of cores included in the multicore processor or performed by the plurality of cores included in the multicore processor. For example, when the first operation, the second operation, and the third operation are performed based on the method according to one embodiment, the first operation, the second operation and the third operation may all be performed by a first core included in the multicore processor, or the first operation and the second operation may be performed by the first core included in the multicore processor, while the third operation may be performed by a second core included in the multicore processor.

In the embodiments of the disclosure, the one or more processors 140 may denote a system on a chip (SoC) where one or more processors and other electronic parts are integrated, a single core processor, a multicore processor, or a core included in a single core processor or a multicore processor, and herein, the core may be implemented as a CPU, a GPU, an APU, an MIC, an NPU, a hardware accelerator, or a machine learning accelerator and the like, but embodiments of the disclosure may not be limited thereto. Hereafter, the expression processor 140 is used to describe the operations of the electronic device 100 for convenience of description.

The processor 140 may identify the position of the electronic device 100, and identify, based on the map information, an operation mode corresponding to the identified position out of a first operation mode of operating some of the plurality of wheels 120 and a second operation mode of operating all of the plurality of wheels 120.

The processor 140, for example, may identify the position of the electronic device 100 through a GPS sensor, and identify, based on an operation mode for each area included in the map information, an operation mode corresponding to a current position out of the first operation mode that is a two-wheel operation mode and the second operation mode that is a four-wheel operation mode.

However, identifying the position of the electronic device 100 may not be limited thereto, and may vary in any other way. For example, the processor 140 may also identify a current position based on an image obtained through a camera. Additionally, the first operation mode and the second operation mode may also vary in any other way. For example, the first operation mode may be an operation mode of changing the position of the electronic device 100 by using wheels, while the second operation mode may be an operation mode of changing the positon of the electronic device 100 by using chains.

The processor 140 may control the driving unit 130 based on the identified operation mode. In other words, the electronic device 100 may change the operation modes automatically based on the map information even without a control command of the user, thereby enhancing user convenience.

The electronic device 100 may further include a sensor detecting torque of at least one of the plurality of wheels 120, and as the torque detected through the sensor is increased to a value greater than or equal to a threshold value during control of the driving unit 130 based on the first operation mode, the processor 140 may change the first operation mode to the second operation mode to control the driving unit 130.

The electronic device 100, for example, may be driven in the first operation mode in which some of the plurality of wheels 12 are only used, and then torque may be increased to a value greater than or equal to a threshold value due to an obstacle. In this case, the processor 140 may change, based on the torque greater than or equal to the threshold value, the operation mode of the electronic device 100 to the second operation mode in which all of the plurality of wheels 120 are used. In the case where the second operation mode is used, the electronic device may pass through the obstacle readily, and descriptions in relation to this are provided hereafter with reference to the drawings.

In the case where the processor 140 changes the operation mode to the second operation mode and is operated in the second operation mode, and then torque detected through the sensor is decreased to a value less than the threshold value, the processor 140 may change the second operation mode to the first operation mode to control the driving unit 130. In other words, the processor 140 may change, based on the electronic device 100 being identified as having passed through the obstacle, the second operation mode to the first operation mode to control the driving unit 130.

However, the processor 140 may not limited thereto, and may identify the electronic device 100 as having passed through the obstacle through an image captured by a camera. Alternatively, the processor 140 may also change the second operation mode to the first operation mode threshold time later after changing the operation mode of the electronic device 100 to the second operation mode.

The processor 140 may change the first operation mode to the second operation mode, and update the map information based on a position at which the operation mode is changed.

The map information may include a map of a past timepoint and an operation mode for each area based on the map of the past timepoint. In other words, the map information may include information at the time of generation and may not include subsequent information. Accordingly, in the case where there was an obstacle at the timepoint of generation of map information, the processor 140 may change the operation mode from the first operation mode to the second operation mode before torque detected through the sensor is increased to a value greater than or equal to the threshold value. However, in the case where an obstacle is disposed after the timepoint of generation of map information, the processor 140 may not change the operation mode based on the map information, and in the case where torque detected through the sensor during driving in the first operation mode is increased to a value greater than or equal to the threshold value, may change the operation mode from the first operation mode to the second operation mode. Accordingly, the processor 140 may update the map information based on an obstacle disposed after the timepoint of generation of map information. For example, the processor 140 may change the operation mode of the area in which an obstacle is disposed from the first operation mode to the second operation mode to update the map information.

However, updating map information may not limited thereto, and the processor 140 may determine whether to update based on torque strength. For example, in the case where the torque strength is greater than or equal to a first threshold value and less than a second threshold value, the processor 140 may maintain the map information while changing the first operation mode to the second operation mode, and in the case where the torque strength is greater than or equal to the second threshold value, may also change the first operation mode to the second operation mode and update the map information. In other words, in the case where an obstacle is relatively light like a toy, the processor 140 may not update the map information since the disposition state of the obstacle may be changed again. On the contrary, in the case where an obstacle is relatively heavy, the processor 140 may update the map information to change the operation mode proactively since the disposition state of the obstacle is less likely to be changed.

In one embodiment, the plurality of wheels 120 may include a pair of first wheels disposed forward with respect to the center of the electronic device 100, and a pair of second wheels disposed rearward with respect to the center of the electronic device, and in the case where the electronic device 100 is in the first operation mode, the processor 140 may control the driving unit 130 to drive one of the first wheel(s) and the second wheel(s), and in the case where the electronic device 100 is in the second operation mode, control the driving unit 130 to drive all of the first wheel(s) and the second wheel(s). In other words, the processor 140 may drive one of the first wheel(s) and the second wheel(s) in the first operation mode to perform a two-wheel operation, and drive all of the first wheel(s) and the second wheel(s) in the second operation mode to perform a four-wheel operation.

The driving unit 130 may include a first driving unit 130 rotating the plurality of wheels 120, a second driving unit 130 moving the first wheels up and down relative to the electronic device 100 with respect to a pivot, and a third driving unit 130 moving the second wheels back and forth relative to the electronic device 100 with respect to the pivot, and the processor 140 may control the second driving unit 130 to lift and space the first wheels from a driving surface, control the third driving unit 130 to move the second wheels to the center of the electronic device 100, and control the first driving unit 130 to drive the second wheels, in the case where the electronic device 100 is in the first operation mode, and may control the second driving unit 130 to contact the first wheels with the driving surface, control the third driving unit 130 to move the second wheels to the rear of the electronic device 100, and control the first driving unit 130 to drive the first wheels and the second wheels, in the case where the electronic device 100 is in the second operation mode.

The processor 140 may control the first driving unit 130 to maintain the speed of the electronic device 10 by increasing the speed of the first wheels and decreasing the speed of the second wheels while the operation mode of the electronic device 100 is changed from the first operation mode to the second operation mode, and may control the first driving unit 130 to maintain the speed of the electronic device 100 by decreasing the speed of the first wheels and increasing the speed of the second wheels while the operation mode of the electronic device 100 is changed from the second operation mode to the first operation mode.

Based on the above operations, the electronic device 100 may change the operation mode while maintaining the driving speed.

Herein, in the case where the operation mode of the electronic device 100 is changed, the processor 140 may control the first driving unit 130 to change the speed of the first wheels and the speed of the second wheels based on a speed of the electronic device 100, an angular velocity at which the first wheels are moved up and down with respect to a pivot, and a speed at which the second wheels are moved to the front and rear of the electronic device 100.

The electronic device 100 may further include a plurality of auxiliary wheels, and the plurality of auxiliary wheels may contact a driving surface in the first operation mode, and may be spaced from the driving surface in the second operation mode.

In other words, the electronic device 100 may contact the driving surface through the second wheels and the plurality of auxiliary wheels in the first operation mode, and contact the driving surface through the first wheels and the second wheels in the second operation mode.

In the case where the position of the electronic device 100 is a predetermined position, the processor 140 may control the driving unit 130 to rotate the electronic device 100 such that the second wheels are driven in a way that at least one of the rotation speed or the rotation direction of each of the second wheels differs.

Based on the above operations, the electronic device 100 may avoid an obstacle.

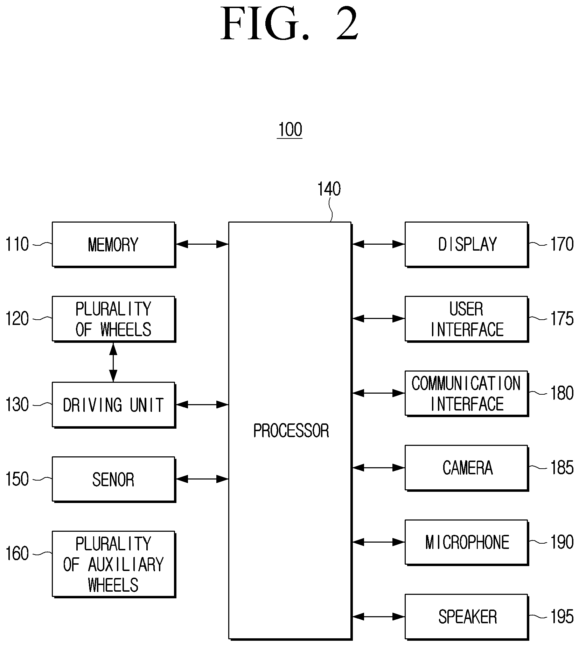

FIG. 2 is a block diagram illustrating a specific configuration of an electronic device 100 according to one embodiment. The electronic device 100 may include memory 110, a plurality of wheels 120, a driving unit 130, and a processor 140. Additionally, referring to FIG. 2, the electronic device 100 may further include a sensor 150, a plurality of auxiliary wheels 160, a display 170, a user interface 175, a communication interface 180, a camera 185, a microphone 190, and a speaker 195. Among elements illustrated in FIG. 2, detailed descriptions of those overlapping the elements illustrated in FIG. 1 are omitted.

The sensor 150 may include a sensor for identifying the position of the electronic device 100 or an obstacle, a sensor for detecting torque of at least one of the plurality of wheels, and the like.

The sensor 150, for example, may include a GPS sensor. Alternatively, the sensor 150 may include at least one of an RGB-D sensor, a ToF sensor or an IMU sensor. In this case, the processor 140 may obtain an RGB image in a visible light area through the RGB-D sensor, a depth image through IR, and a thermal image through IR, and based on the obtained image, identify the position of the electronic device 100 or an obstacle. Alternatively, the processor 140 may identify the position of the electronic device 100 or an obstacle through a ToF sensor that calculates, as time, a distance at which light radiated to an object through infrared wavelengths is reflected and returned, and recognizes a stereoscopic effect or space information, movements of an object as a three-dimensional sensor. However, the sensor 150 may not be limited thereto, and may be any sensor as long as the sensor identifies the position of the electronic device 100 or an obstacle.

The plurality of auxiliary wheels 160 may be wheels for supporting the electronic device 100, and a driving force may not be transferred to the auxiliary wheels. For example, the plurality of auxiliary wheels may contact the driving surface in the first operation mode, and as the second wheels are rotated by the driving unit 130, may be naturally rotated by supporting to the second wheels. Since the first wheels are spaced from the driving surface in the first operation mode, the second wheels and one side of the lower portion of the electronic device may contact the driving surface thereby increasing a frictional force and making it hard to drive, in the case where the plurality of auxiliary wheels 160 is not provided. The plurality of auxiliary wheels 160 may be an element included to solve the above problem.

The display 170 as an element displaying an image may be implemented as various types of displays such as a liquid crystal display (LCD), an organic light emitting diode (OLED) display, a plasma display panel (PDP) and the like. In the display 170, driving circuitry implementable in the form of an a-si TFT, a low temperature poly silicon (LTPS) TFT, an organic TFT (OTFT) and the like, a backlight unit, and the like may be included together. Meanwhile, the display 170 may be implemented as a touch screen coupled with a touch sensor, a flexible display, a three-dimensional (3D) display, and the like.

The user interface 175 may be implemented as a button, a touch pad, a mouse, a keyboard and the like, or as a touch screen capable of performing a display function and a manipulation input function together. Herein, the button may be various types of buttons such as a mechanical button, a touch pad, a wheel and the like that are formed in any area of the front, side, rear and the like of the exterior of the main body of the electronic device 100.

The communication interface 180 is an element performing communication with various types of external devices based on various communication methods. For example, the electronic device 100 may perform communication with a user terminal device or a server through the communication interface 180.

For example, the communication interface 180 may include a Wi-Fi module, a Bluetooth module, an infrared communication module and the like. Herein, each communication module may be implemented in the form of at least one hardware chip.

The Wi-Fi module, the Bluetooth module perform communication based on a Wi-Fi method, a Bluetooth method respectively. In the case where the Wi-Fi module or the Bluetooth module is used, various types of connection information such as an SSID, a session key and the like may be first transmitted and received, and are used to perform a communication connection and then transmit and receive various types of information. The infrared communication module performs communication based on an infrared Data Association (IrDA) communication technology which transmits data wirelessly over a short distance by using infrared rays between optical light and millimeter waves.

A wireless communication module may include at least one communication chip that performs communication according to various wireless communication standards such as Zigbee, 3rd Generation (3G), 3rd Generation Partnership Project (3GPP), Long Term Evolution (LTE), LTE Advanced (LTE-A), 4th Generation (4G), 5th Generation (5G) and the like, in addition to the above communication methods.

Alternatively, the communication interface 180 may include a wired communication interface such as HDMI, DP, Thunderbolt, USB, RGB, D-SUB, DVI and the like.

In addition to the above modules, the communication interface 180 may also include at least one among wired communication modules that perform communication by using a local area network (LAN) module, an Ethernet module, or pair cables, coaxial cables, or fiber optic cables and the like.

The camera 185 is an element for capturing a still image or a moving image. The camera 185 may capture a still image at a specific timepoint, but may capture a still image continuously.

The camera 185 may capture an image of one direction of the electronic device 100. In particular, the processor 140 may identify the position of the electronic device 100, the presence of an obstacle and the like based on an image captured through the camera 185.

The camera 185 includes a lens, a shutter, an aperture, a solid-state imaging device, an analog front end (AFE) and a timing generator (TG). The shutter adjusts time taken for light reflected from a subject to come into the camera 185, and the aperture adjusts an amount of light input to the lens by mechanically increasing or decreasing the size of an opening into which light comes. In the case where light reflected from a subject is accumulated as photocharges, the solid-state imaging device outputs an image formed by the photocharges as an electrical signal. The TG outputs a timing signal for reading out pixel data of the solid-state imaging device, and the AFE samples and digitizes an electrical signal output from the solid-state imaging device.

The camera 185 may be disposed on one side of the electronic device 100. However, the camera 185 may not be limited thereto, and may also include a plurality of cameras disposed to capture images of various directions of the electronic device 100.

The microphone 190 is an element for receiving an input of a sound and converting the sound into an audio signal. The microphone 190 may be connected with the processor 140 electrically, and may receive a sound under the control of the processor 140.

For example, the microphone 190 may be formed in directions of an upper side, a front surface, or a side surface and the like of the electronic device 100. Alternatively, the microphone 190 may also be provided in a separate device, e.g., a remote controller and the like, apart from the electronic device 100. In this case, the remote controller as a separate device may also receive a sound through the microphone 190, and provide, to the electronic device 100, an audio signal that is an electric signal corresponding to the received sound.

The microphone 190 may include various types of elements such as a microphone collecting a sound in an analog form, amplification circuitry amplifying the collected sound, and A/D converter circuitry sampling the amplified sound and converting the amplified sound into a digital signal, filter circuitry removing noise components from the converted digital signal, and the like.

Meanwhile, the microphone 190 may be implemented in the form of a sound sensor, but may be implemented in any form as long as the microphone 190 collects a sound.

The speaker 195 is an element outputting various types of notification sounds or voice messages and the like as well as various types of audio data processed by the processor 140.

The electronic device 100, as described above, may change an operation mode while maintaining a driving speed even without user control, and may pass through or avoid an obstacle.

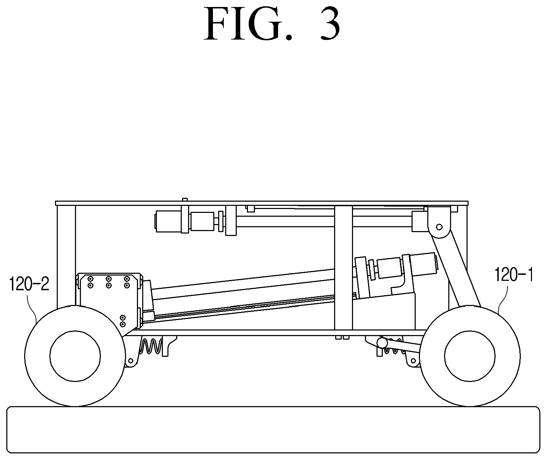

Hereafter, the operations of the electronic device 100 are described in greater detail with reference to FIGS. 3-8. For convenience of description, individual embodiments are described with reference to FIGS. 3-8. However, the individual embodiments of FIGS. 3-8 may also be implemented in any combinations.

FIG. 3 is a view provided to explain a structure of an electronic device 100 according to one embodiment.

The electronic device 100 may be driven while the body of the electronic device 100 is supported through a plurality of wheels 120.

The plurality of wheels 120, as illustrated in FIG. 3, may include a pair of first wheels 120-1 disposed forward with respect to the center of the electronic device 110 and a pair of second wheels 120-2 disposed rearward with respect to the center of the electronic device 100.

The processor 140 may identify the position of the electronic device 100, and identify, based on map information, an operation mode corresponding to the identified position out of a first operation mode of driving some of the plurality of wheels 120 and a second operation mode of driving all of the plurality of wheels.

However, the processor 140 may not be limited thereto, and may also identify an operation mode without using map information. For example, the processor 140 may also identify, based on an image captured through the camera 180 or sensing information obtained by a LiDAR sensor and the like, an area feature in front of the electronic device 100, and identify an operation mode based on the identified area feature. Alternatively, the processor 140 may also identify, based on sensing information obtained by an IMU sensor, a road state or gradient. Alternatively, the processor 140 may also identify position information of the electronic device 100, transmit the position information to a server, and receive an operation mode from the server. In this case, the server may store the map information, identify the operation mode of the electronic device 100 based on the received position information, and then provide the identified operation mode to the electronic device 100.

Based on the above operations, the operation mode of the electronic device 100 may be changed automatically even without user intervention securing improvement in user convenience.

The processor 140 may control the driving unit 130 based on the identified operation mode. The processor 140, for example, may control the driving unit 130 to drive the second wheels in the case where the electronic device 100 is in the first operation mode and to drive all of the first and second wheels in the case where the electronic device 100 is in the second operation mode.

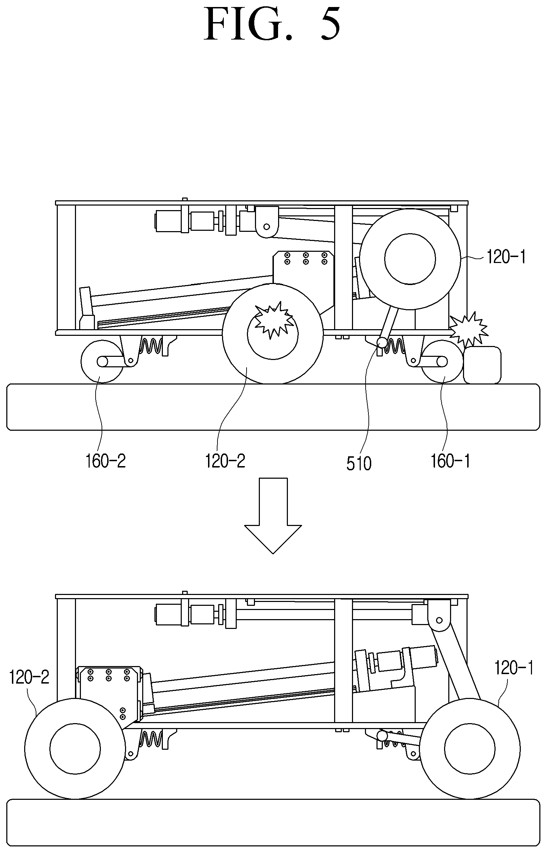

Additionally, the positions of the plurality of wheels 120 may be changed while the operation mode of the electronic device 100 is changed. Descriptions in relation to this are provided with reference to FIG. 5.

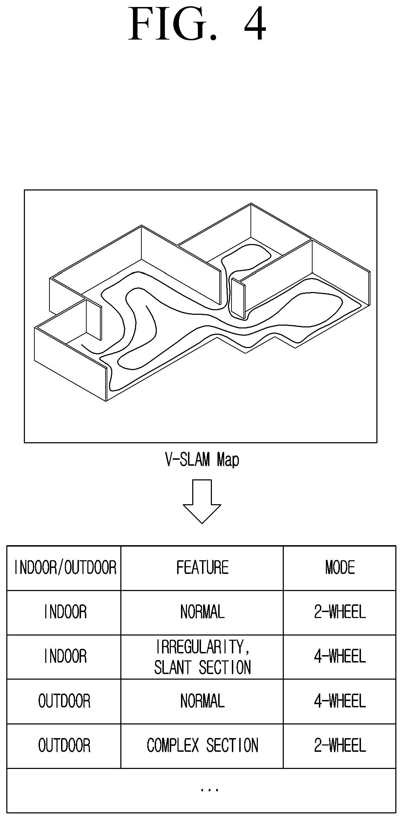

FIG. 4 is a view provided to explain a method of obtaining map information according to one embodiment.

The map information may include a map and an operation mode for each area in the map.

For example, the map, as illustrated at the upper end of FIG. 4, may be obtained by creating a surrounding environment map through at least one sensor, and at the same time, based on a SLAM method in which the position of a device is estimated in the map. However, the map may not be limited thereto, and may also be obtained in any other way.

The processor 140 may identify an operation mode for each area in the map based on predetermined conditions, and obtain a map and map information including an operation mode for each area. For example, the processor 140, as illustrated at the lower end of FIG. 4, may identify an operation mode based on whether the electronic device is in an indoor space, irregularities, an area feature such as a slant section, the presence or absence of an obstacle and the like.

However, the processor 140 may not be limited thereto, and may identify an operation mode for each area in further consideration of any other factor.

The processor 140 may identify an operation mode corresponding to the position of the electronic device 100 based on the map information obtained based on the above-described methods.

The processor 140 may update the map information in the case where the operation mode is changed for various reasons, and differs from the operation mode of the map information, while the processor 140 controls the driving unit 130 based on the identified operation mode.

For example, the processor 140 may change the operation mode based on an obstacle being identified. Alternatively, the processor 140 may also change the operation mode based on a user command. In this case, the processor 140 may update the map information based on the changed operation mode. Alternatively, the processor 140 may also update the map information based on the operation mode in a specific area being changed repeatedly predetermined times or greater.

FIG. 5 is a view provided to explain a change in shapes based on an operation mode of an electronic device 100 according to one embodiment.

The electronic device 100 may include a pair of first wheels 120-1 disposed forward with respect to the center of the electronic device 100, a pair of second wheels 120-2 disposed rearward with respect to the center of the electronic device 100, and a plurality of auxiliary wheels 160-1, 160-2. Herein, the sizes of the first wheels 120-1 and the second wheels 120-2 may be greater than those of the plurality of auxiliary wheels 160-1, 160-2.

The driving unit 130 may include a first driving unit rotating the first wheels 120-1 and the second wheels 120-2, a second driving unit moving the first wheels 120-1 up and down relative to the electronic device 100 with respect to a pivot 510, and a third driving unit moving the second wheels 120-2 back and forth relative to the electronic device 100.

The processor 130, as illustrated at the upper end of FIG. 5, may control the second driving unit to lift and space the first wheels 120-1 from a driving surface in the case where the electronic device 100 is in the first operation mode, control the third driving unit to move the second wheels 120-2 to the center of the electronic device 100, and control the first driving unit to drive the second wheels 120-2. The second wheels 120-2 may be moved upward with respect to the electronic device 100, while being moved to the center of the electronic device 100. Accordingly, the body of the electronic device 100 in the first operation mode may become closer to the driving surface than in the second operation mode, and in the case where the electronic device 100 is in the first operation mode, the second wheels 120-2 and the plurality of auxiliary wheels 160-1, 160-2 may contact the driving surface.

The processor 130, as illustrated at the lower end of FIG. 5, may control the second driving unit to contact the first wheels 120-1 with the driving surface in the case where the electronic device 100 is in the second operation mode, control the third driving unit to move the second wheels 120-2 to the rear of the electronic device 100, and control the first driving unit to drive the first wheels 120-1 and the second wheels 120-2. The second wheels 120-2 may be moved downward with respect to the electronic device 100 while being moved to the rear of the electronic device 100. Accordingly, the body of the electronic device 100 in the second operation mode may be spaced further from the driving surface than in the first operation mode, and in the case where the electronic device 100 is in the second operation mode, the first wheels 120-1 and the second wheels 120-2 may contact the driving surface.

That is, in the first operation mode, the electronic device 100 may be driven through the second wheels 120-2 disposed at the center of the electronic device 100 and the plurality of auxiliary wheels 160-1, 160-2 disposed forward and rearward with respect to the center of the electronic device 100, and in the second operation mode, may be driven through the first wheels 120-1 and the second wheels 120-2 disposed forward and rearward respectively with respect to the center of the electronic device 100.

The electronic device 100 may rotate in place with respect to the center of the second wheels 120-2 during the first operation mode. Herein, each of the plurality of auxiliary wheels may be implemented as omni wheels. In particular, in the first operation mode, the first wheels 120-1 may be lifted while the second wheels 120-2 are placed at the center of the electronic device 100, such that resistance during a rotation in place is decreased. In other words, in the case where the electronic device 100 is in the first operation mode, an area occupied by the electronic device 100 may be decreased, and accordingly, a rotation in place may be enabled more readily in the first operation mode than in the second operation mode, in a complex or narrow space. Additionally, in the case where an obstacle and the like is detected, the electronic device 100 may be operated in the second operation mode to pass over or avoid the obstacle even without user control, thereby securing improvement in user convenience.

Additionally, since the second wheels 120-2 and the plurality of auxiliary wheels 160-1, 160-2 contact the driving surface in the first operation mode, the first operation mode may be more reliable than the second operation mode in which the first wheels 120-1 and the second wheels 120-2 contact the driving surface. Further, since the body in the first operation mode is lower than in the second operation mode, the first operation mode may be more reliable than the second operation mode. Accordingly, in the case where the electronic device 100 is a device on which the user gets like a wheelchair, the electronic device 100 may be driven in the first operation mode in a normal situation, such that the user feels comfortable, and driven in the second operation mode in the case where an obstacle and the like is detected such that the electronic device passes over or avoids the obstacle without user control, enhancing user convenience.

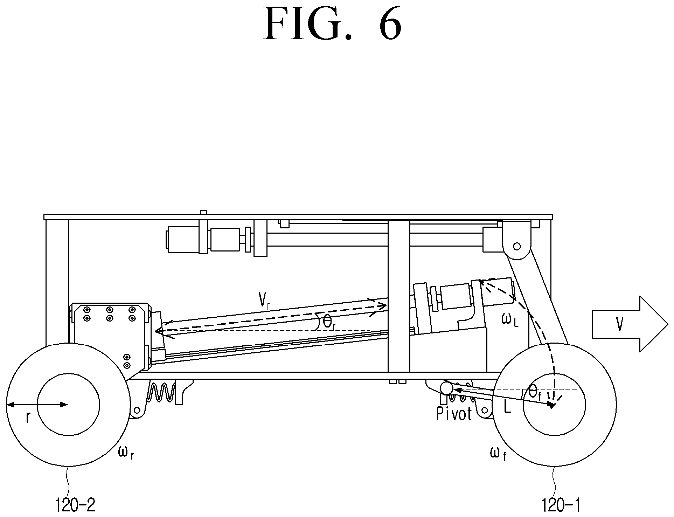

FIG. 6 is a view provided to explain an operation of changing an operation mode while maintaining a driving speed of an electronic device 100 according to one embodiment.

In the case where the operation mode of the electronic device 100 is changed, the processor 140 may control the first driving unit to change the speed of the first wheels 120-1 and the speed of the second wheels 120-2 based on a speed of the electronic device 100, an angular velocity at which the first wheels 120-1 are moved up and down with respect to the pivot, a speed at which the second wheels 120-2 are moved to the front and rear of the electronic device 100.

For example, in the case where the electronic device 10, as illustrated in FIG. 6, is moved forward (the right side of the drawing) at a V speed, the speed $\omega_f$ of the first wheels 120-1 and the speed $\omega_r$ of the second wheels 120-2 may be represented as follows.

$$\omega_f = \omega_r = \frac{V}{r}$$

Herein, r may be radii of the first wheels 120-1 and the second wheels 120-2.

At a time when the mode of the electronic device 100 is changed from the second operation mode to the first operation mode as illustrated in FIG. 6, the second wheels 120-2 may be moved to the front of the electronic device 100, and accordingly, since the speed of the second wheels 120-2 needs to be increased, while the first wheels 120-1 is relatively moved to the rear of the electronic device 100, the speed of the first wheels 120-1 needs to be decreased, such that the driving speed of the electronic device 100 may remain constant despite a change in the operation mode. Thus, at a time when the operation mode is changed from the second operation mode to the first operation mode, the speed $\omega_f$ of the first wheels 120-1 and the speed $\omega_r$ of the second wheels 120-2 may be represented as follows.

$$\omega_f = \frac{V - L\omega_L \sin\theta_f}{r}$$

$$\omega_r = \frac{V + V_r \cos\theta_r}{r}$$

Herein, L is a length from the pivot to the center of the first wheels 120-1, $\omega_L$ is an angular velocity at which the first wheels 120-1 are moved up and down, $\theta_f$ is an angle formed by a straight line from the pivot to the center of the first wheels 120-1 and a driving surface, $V_r$ is a speed at which the second wheels 120-2 are moved to the front and rear of the electronic device 100, and $\theta_r$ may be an angle formed by a straight line where the second wheels 120-2 are moved to the front and rear of the electronic device 100 and the driving surface.

As shown in the case where the operation mode is changed from the second operation mode to the first operation mode, at a time when the operation mode is changed from the first operation mode to the second operation mode, the speed $\omega_f$ of the first wheels 120-1 and the speed $\omega_r$ of the second wheels 120-2 may be represented as follows.

$$\omega_f = \frac{V + L\omega_L \sin\theta_f}{r}$$

$$\omega_r = \frac{V - V_r \cos\theta_r}{r}$$

As the operation mode is changed completely, the speed $\omega_f$ of the first wheels 120-1 and the speed $\omega_r$ of the second wheels 120-2 may be represented as follows.

$$\omega_f = \omega_r = \frac{V}{r}$$

However, in the first operation mode, the first wheels 120-1 may not be driven.

Based on the above operations, the processor 140 may change the operation mode while maintaining the driving speed.

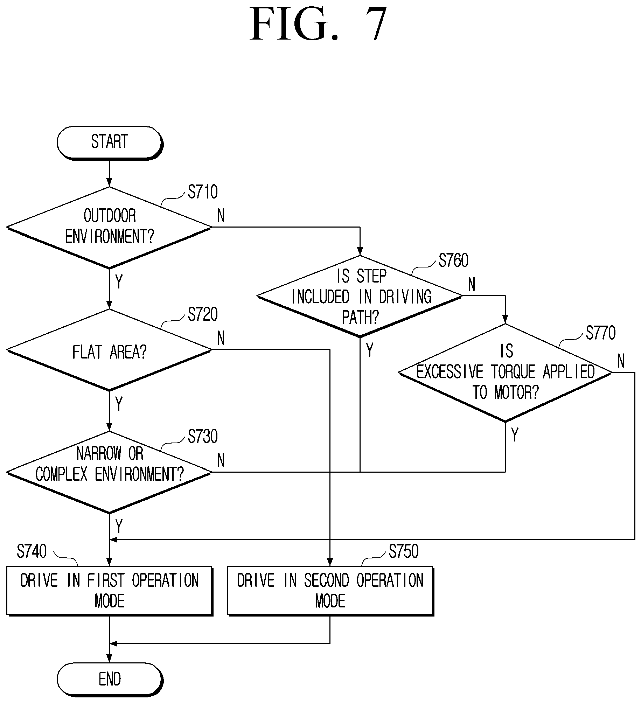

FIG. 7 is a flowchart provided to explain a method of identifying an operation mode of an electronic device 100 according to one embodiment.

A processor 140 may identify an operation mode corresponding to the position of the electronic device 100 based on map information.

However, the processor 140 may not be limited thereto, and may also identify an operation mode in real time based on sensing information, a captured image and the like.

For example, the processor 140, as illustrated in FIG. 7, may identify whether an environment is an outdoor environment (S710). Based on the environment being identified as an outdoor environment, the processor 140 may identify whether the outdoor environment is a flat area (S720). Based on the outdoor environment being identified as a flat area, the processor 140 may identify whether the outdoor environment is a narrow or complex environment (S730). Based on the outdoor environment being identified as a narrow or complex environment, the processor 140 may be driven in a first operation mode (S740), and based on the outdoor environment not being identified as a narrow or complex environment, the processor may be driven in a second operation mode (S750). Alternatively, based on the outdoor environment not being identified as a flat area, the processor 140 may be driven in the second operation mode (S750).

Based on an environment not being identified as an outdoor environment, the processor 140 may identify whether a step is included in a driving path (S760), and based on the step being identified in the driving path, may also be driven in the second operation mode (S750). Based on no step being identified in the driving path, the processor 140 may identify whether excessive torque is applied to a motor (S770). Based on excessive torque applied to the motor being identified, the processor 140 may be driven in the second operation mode (S750), and based on no excessive torque applied to the motor being identified, may be driven in the first operation mode (S740).

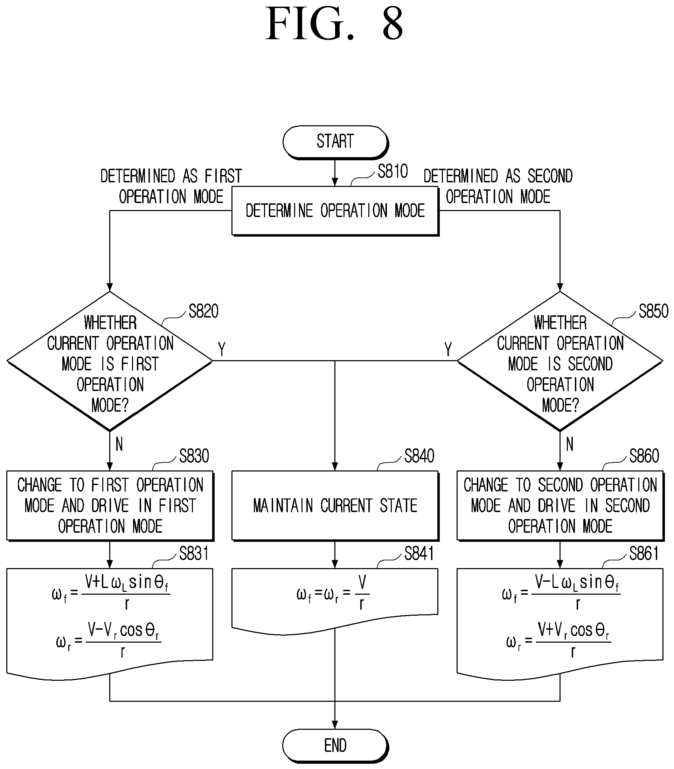

FIG. 8 is a flowchart provided to explain a method of changing an operation mode of an electronic device 100 according to one embodiment.

First, the processor 140 may determine an operation mode (S810).

Based on an operation mode being determined as a first operation mode, the processor 140 may identify whether a current operation mode is the first operation mode (S820), (S820), and based on the current operation mode not being the first operation mode, may change the current operation mode to the first operation mode and be driven in the first operation mode (S830). In this case, the processor 140, as described with reference to FIG. 6, may adjust the speed of each wheel (S831). Based on the current operation mode being the first operation mode, the processor 140 may maintain a current state (S840). In this case, the processor 140, as described with reference to FIG. 6, may maintain the speed of each wheel (S841).

Based on an operation mode being determined as a second operation mode, the processor 140 may identify whether a current operation mode is a second operation mode (S850), and based on the current operation mode not being the second operation mode, the processor may change the current operation mode to the second operation mode and be driven in the second operation mode (S860). In this case, the processor 140, as described with reference to FIG. 6, may adjust the speed of each wheel (S860). Based on the current operation mode being the second operation mode, the processor 140 may maintain a current state (S840). In this case, the processor 140, as described with reference to FIG. 6, may maintain the speed of each wheel (S841).

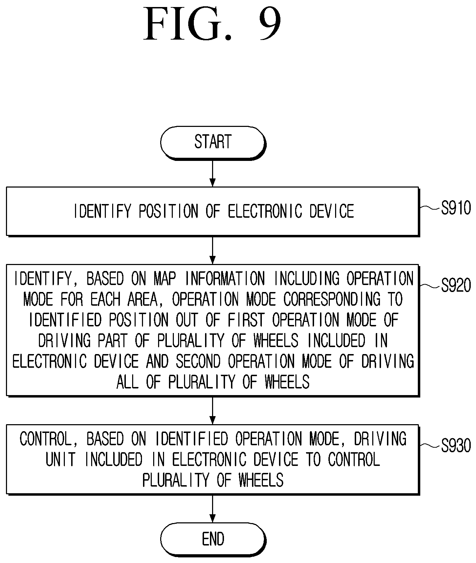

FIG. 9 is a flowchart provided to explain a control method of an electronic device 100 according to one embodiment.

First, the method includes identifying the position of an electronic device (S910). Additionally, the method includes identifying an operation mode corresponding to the identified position out of a first operation mode of driving some of a plurality of wheels included in the electronic device and a second operation mode of driving all of the plurality of wheels based on map information including an operation mode for each area (S920). Additionally, the method includes controlling a driving unit included in the electronic device to control the plurality of wheels based on the identified operation mode (S930).

Additionally, the method may further include detecting torque of at least one of the plurality of wheels, and based the torque being increased to a value greater than or equal to a threshold value during control of the driving unit based on the first operation mode, changing the first operation mode to the second operation mode to control the driving unit.

Additionally, the method may further include changing, based on the torque being decreased to a value less than the threshold value after a change to the second operation mode and an operation in the second operation mode, the second operation mode to the first operation mode to control the driving unit.

Additionally, the method may further include changing the first operation mode to the second operation mode, and based on a position at which the operation mode is changed, updating map information.

Additionally, the plurality of wheels may include a pair of first wheels disposed forward with respect to the center of the electronic device, and a pair of second wheels disposed rearward with respect to the center of the electronic device, and the controlling (S930) may include controlling the driving unit to drive one of the first wheel(s) and the second wheel(s) in the case where the electronic device is in the first operation mode, and controlling the driving unit to drive all of the first wheel(s) and the second wheel(s) in the case where the electronic device is in the second operation mode.

Additionally, the driving unit may include a first driving unit rotating the plurality of wheels, a second driving unit moving the first wheels up and down relative to the electronic device with respect to a pivot, and a third driving unit moving the second wheels back and forth relative to the electronic device with respect to the pivot, and the controlling (S930) may include controlling the second driving unit to lift and space the first wheels from a driving surface, controlling the third driving unit 130 to move the second wheels to the center of the electronic device, and controlling the first driving unit to drive the second wheels in the case where the electronic device is in the first operation mode, and controlling the second driving unit to contact the first wheels with the driving surface, controlling the third driving unit to move the second wheels to the rear of the electronic device, and controlling the first driving unit to drive the first wheels and the second wheels in the case where the electronic device is in the second operation mode.

Additionally, the controlling (S930) may include controlling the first driving unit to maintain the speed of the electronic device by increasing the speed of the first wheels and decreasing the speed of the second wheels while the operation mode of the electronic device is changed from the first operation mode to the second operation mode, and controlling the first driving unit to maintain the speed of the electronic device by decreasing the speed of the first wheels and increasing the speed of the second wheels while the operation mode of the electronic device is changed from the second operation mode to the first operation mode.

Additionally, the controlling (S930) may include controlling the first driving unit to change the speed of the first wheels and the speed of the second wheels based on a speed of the electronic device, an angular velocity at which the first wheels are moved up and down with respect to the pivot, and a speed at which the second wheels are moved to the front and rear of the electronic device, in the case where the operation mode of the electronic device is changed.

Further, the electronic device may further include a plurality of auxiliary wheels, and the plurality of auxiliary wheels may contact the driving surface in the first operation mode and may be spaced from the driving surface in the second operation mode.

Further, the controlling (S930) may include, in the case where the position of the electronic device is a predetermined position, controlling the driving unit to rotate the electronic device such that the second wheels are driven in a way that at least one of the rotation speed or the rotation direction of each of the second wheels differs.

According to the above-described embodiments, the electronic device may change an operation mode while maintaining a driving speed and avoid an obstacle, even without user control. Further, the electronic device may be operated in an optimal operation mode and at an optimal speed to enhance power efficiency during driving.

Meanwhile, the embodiments described above may be implemented with software including instructions stored in a storage medium readable by a machine (e.g., a computer). The machine, as a device capable of calling the stored instructions from the storage medium and operating according to the called instructions, may include an electronic device (e.g., electronic device A) according to the disclosed embodiments. Based on the instructions being executed by a processor, the processor may perform functions corresponding to the instructions directly or by using other elements under the control of the processor. The instructions may include a code generated or executed by a compiler or an interpreter.

The machine-readable storage medium may be provided in the form of a non-transitory storage medium. Herein, the term "non-transitory" only means that the storage medium does not include a signal and that the storage medium is tangible, while the term does not differentiate semi-permanent or temporary storage of data in the storage medium.

According to the embodiments set forth herein, the method may be provided in a computer program product. The computer program product may be exchanged between a seller and a purchaser as a commodity. The computer program product may be distributed in the form of a machine-readable storage medium (e.g., compact disc read only memory (CD-ROM)) or distributed online through an application store (e.g., Play Store™). In the case of online distribution, at least part of the computer program product may be stored at least temporarily, or may be generated temporarily in a storage medium such as a manufacturer's server, a server of an application store, or memory of a relay server.

Additionally, the embodiments described above may be implemented in a recording medium readable by a computer or a device similar to a computer by using software, hardware or a combination thereof. In some cases, the embodiments set forth herein may be implemented as a processor itself. In the case of software implementation, the embodiments such as steps and functions described herein may be implemented with separate software modules. Each of the software modules may perform one or more functions and operations set forth herein.

Meanwhile, computer instructions for performing processing operations of the device according to the embodiments described above may be stored in a non-transitory computer-readable medium. The computer instructions stored in the non-transitory computer-readable medium, when executed by a processor of a specific device, cause the device to perform the processing operations in the device according to the embodiments described above. The non-transitory computer-readable medium means a medium that stores data semi-permanently and is readable by a machine, rather than a medium such as a register, cache, and memory and the like that store data temporarily. Specific examples of the non-transitory computer-readable medium may include a CD, a DVD, a hard disc, a blue-ray disc, a USB, a memory card, and ROM and the like.

Further, each of the elements (e.g., modules or programs) according to the embodiments described above may be comprised of a single entity or a plurality of entities, and some of the corresponding sub elements described above may be omitted, or another sub element may be further included in the embodiments. Alternatively or additionally, some of the elements (e.g., modules or programs) may be integrated into one entity to perform functions performed by each corresponding element prior to the integration, in an identical way or a similar way. Operations performed by a module, a program, or another element, according to the embodiments, may be executed sequentially, in parallel, repetitively, or heuristically, or at least some of the operations may be executed in a different order, omitted, or include another operation.

While example embodiments of the disclosure are illustrated and described above, embodiments of the disclosure are not limited to specific embodiments set forth herein, and certainly, various modifications thereof may be made by those skilled in the art, without departing from the subject matter of the disclosure, claimed in the section of claims, and should not be understood as separating from the technical spirit or prospect of the disclosure.

## Claims

1. An electronic device comprising:

   memory storing map information including an operation mode for each area;
   a plurality of wheels;
   a driving unit controlling the plurality of wheels; and
   one or more processors connected to the memory and the driving unit to control the electronic device,
   wherein the processors,
   identify a position of the electronic device,
   identify, based on the map information, an operation mode corresponding to the identified position out of a first operation mode of driving some of the plurality of wheels and a second operation mode of driving all of the plurality of wheels, and
   control, based on the identified operation mode, the driving unit.

2. The electronic device of claim 1 further comprising:

   a sensor detecting torque of at least one of the plurality of wheels,
   wherein the processors change, based on torque detected through the sensor being increased to a value greater than or equal to a threshold value while controlling the driving unit in the first operation mode, the first operation mode to the second operation mode to control the driving unit.

3. The electronic device of claim 2,
   wherein the processors change, based on torque detected through the sensor being decreased to a value less than the threshold value after a change to the second operation mode and an operation in the second operation mode, the second operation mode to the first operation mode to control the driving unit.

4. The electronic device of claim 2,
   wherein the processors change the first operation mode to the second operation mode, and updates, based on a position at which the operation mode is changed, the map information.

5. The electronic device of claim 1,
   the plurality of wheels comprising:

   a pair of first wheels disposed forward with respect to a center of the electronic device; and
   a pair of second wheels disposed rearward with respect to a center of the electronic device,
   wherein the processors control, based on the electronic device being in the first operation mode, the driving unit to drive one of the first wheel(s) and the second wheel(s) , and
   control, based on the electronic device being in the second operation mode, the driving unit to drive all of the first wheel(s) and the second wheel(s).

6. The electronic device of claim 5,
   the driving unit comprising:

   a first driving unit rotating the plurality of wheels;
   a second driving unit moving the first wheels up and down relative to the electronic device with respect to a pivot ; and
   a third driving unit moving the second wheels back and forth relative to the electronic device,
   wherein the processors control, based on the electronic device being in the first operation mode, the second driving unit to lift and space the first wheels from a driving surface, control the third driving unit to move the second wheels to a center of the electronic device, and control the first driving unit to drive the second wheels, and
   control, based on the electronic device being in the second operation mode, the second driving unit to contact the first wheels with a driving surface, control the third driving unit to move the second wheels to a rear of the electronic device, and control the first driving unit to drive the first wheels and the second wheels.

7. The electronic device of claim 6,

   wherein the processors control the first driving unit to maintain a speed of the electronic device by increasing a speed of the first wheels and decreasing a speed of the second wheels while the electronic device is changed from the first operation mode to the second operation mode, and
   control the first driving unit to maintain a speed of the electronic device by decreasing a speed of the first wheels and increasing a speed of the second wheels while the electronic device is changed from the second operation mode to the first operation mode.

8. The electronic device of claim 7,
wherein the processors control, based on an operation mode of the electronic device being changed, the first driving unit to change a speed of the first wheels and a speed of the second wheels according to a speed of the electronic device, an angular velocity at which the first wheels are moved up and down with respect to the pivot, a speed at which the second wheels are moved to a front and rear of the electronic device.

9. The electronic device of claim 6 further comprising:

a plurality of auxiliary wheels,
wherein the plurality of auxiliary wheels contacts the driving surface in the first operation mode, and is spaced from the driving surface in the second operation mode.

10. The electronic device of claim 5,
wherein the processors control, based on a position of the electronic device being a predetermined position, the driving unit to rotate the electronic device such that the second wheels are driven in a way that at least one of a rotation speed or a rotation direction of each of the second wheels differs.

11. A control method of an electronic device, the method comprising:

identifying a position of the electronic device, identifying, based on map information including an operation mode for each area, an operation mode corresponding to the identified position out of a first operation mode of driving some of a plurality of wheels included in the electronic device and a second operation mode of driving all of the plurality of wheels, and controlling, based on the identified operation mode, a driving unit included in the electronic device to control the plurality of wheels.

12. The method of claim 11 further comprising:

detecting torque of at least one of the plurality of wheels; and
changing, based on the torque being increased to a value greater than or equal to a threshold value while controlling the driving unit in the first operation mode, the first operation mode to the second operation mode to control the driving unit.

13. The method of claim 12 further comprising:
changing, based on the torque being decreased to a value less than the threshold value after a change to the second operation mode and an operation in the second operation mode, the second operation mode to the first operation mode to control the driving unit.

14. The method of claim 12 further comprising:
changing the first operation mode to the second operation mode, and updating, based on a position at which the operation mode is changed, the map information.

15. The method of claim 11,
the plurality of wheels comprising:

a pair of first wheels disposed forward with respect to a center of the electronic device; and
a pair of second wheels disposed rearward with respect to a center of the electronic device,
the controlling comprises controlling, based on the electronic device being in the first operation mode, the driving unit to drive one of the first wheel(s) and the second wheel(s), and
controlling, based on the electronic device being in the second operation mode, the driving unit to drive all of the first wheel(s) and the second wheel(s).

# FIG. 1

100

```
          110                          140
       ┌──────────┐               ┌──────────┐
       │  MEMORY  │ ◄──────────► │          │
       └──────────┘               │PROCESSOR │
┌──────────┐   ┌──────────┐      │          │
│PLURALITY │◄─►│DRIVING UNIT│◄──►│          │
│OF WHEELS │   └──────────┘      └──────────┘
└──────────┘
   120            130
```

# FIG. 2

# FIG. 3

120-2

120-1

# FIG. 4

V-SLAM Map

| INDOOR/OUTDOOR | FEATURE | MODE |
|---|---|---|
| INDOOR | NORMAL | 2-WHEEL |
| INDOOR | IRREGULARITY, SLANT SECTION | 4-WHEEL |
| OUTDOOR | NORMAL | 4-WHEEL |
| OUTDOOR | COMPLEX SECTION | 2-WHEEL |
| . . . | | |

# FIG. 5

# FIG. 6

# FIG. 7

START

S710 — OUTDOOR ENVIRONMENT? — N → S760 — IS STEP INCLUDED IN DRIVING PATH? — N → S770 — IS EXCESSIVE TORQUE APPLIED TO MOTOR? — N

S710 Y → S720 — FLAT AREA? — N

S720 Y → S730 — NARROW OR COMPLEX ENVIRONMENT? — N

S730 Y → S740 DRIVE IN FIRST OPERATION MODE

S750 DRIVE IN SECOND OPERATION MODE

END

# FIG. 8

START

DETERMINED AS FIRST
OPERATION MODE

DETERMINED AS SECOND
OPERATION MODE

S810

DETERMINE OPERATION MODE

S820

WHETHER
CURRENT OPERATION
MODE IS FIRST
OPERATION
MODE?

Y

S850

WHETHER
CURRENT OPERATION
MODE IS SECOND
OPERATION
MODE?

Y

N

S830

CHANGE TO FIRST OPERATION
MODE AND DRIVE IN FIRST
OPERATION MODE

S840

MAINTAIN CURRENT STATE

N

S860

CHANGE TO SECOND OPERATION
MODE AND DRIVE IN SECOND
OPERATION MODE

S831

$$\omega_f = \frac{V + L\omega_L \sin\theta_f}{r}$$

$$\omega_r = \frac{V - V_r \cos\theta_r}{r}$$

S841

$$\omega_f = \omega_r = \frac{V}{r}$$

S861

$$\omega_f = \frac{V - L\omega_L \sin\theta_f}{r}$$

$$\omega_r = \frac{V + V_r \cos\theta_r}{r}$$

END

# FIG. 9

START

IDENTIFY POSITION OF ELECTRONIC DEVICE — S910

IDENTIFY, BASED ON MAP INFORMATION INCLUDING OPERATION MODE FOR EACH AREA, OPERATION MODE CORRESPONDING TO IDENTIFIED POSITION OUT OF FIRST OPERATION MODE OF DRIVING PART OF PLURALITY OF WHEELS INCLUDED IN ELECTRONIC DEVICE AND SECOND OPERATION MODE OF DRIVING ALL OF PLURALITY OF WHEELS — S920

CONTROL, BASED ON IDENTIFIED OPERATION MODE, DRIVING UNIT INCLUDED IN ELECTRONIC DEVICE TO CONTROL PLURALITY OF WHEELS — S930

END

## INTERNATIONAL SEARCH REPORT

| International application No. |
|---|
| **PCT/KR2024/016489** |

### A. CLASSIFICATION OF SUBJECT MATTER

**B25J 5/00**(2006.01)i; **B25J 13/08**(2006.01)i; **B62D 61/12**(2006.01)i; **B62D 57/028**(2006.01)i; **G05D 1/246**(2024.01)i

According to International Patent Classification (IPC) or to both national classification and IPC

### B. FIELDS SEARCHED

Minimum documentation searched (classification system followed by classification symbols)

B25J 5/00(2006.01); A47L 9/00(2006.01); A47L 9/28(2006.01); B25J 11/00(2006.01); B25J 19/02(2006.01); B60L 15/20(2006.01); B63B 73/30(2020.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 주행 로봇(mobile robot), 지도(map), 메모리(memory), 바퀴(wheel), 구동부(driver), 프로세서(processor), 제어(control), 동작 모드(operation mode)

### C. DOCUMENTS CONSIDERED TO BE RELEVANT

| Category* | Citation of document, with indication, where appropriate, of the relevant passages | Relevant to claim No. |
|---|---|---|
| Y | JP 2023-146351 A (TOYOTA INDUSTRIES CORP.) 12 October 2023 (2023-10-12)<br>See paragraphs [0022]-[0031], claims 1-4 and figures 1-3. | 1,5,10,11,15 |
| A | | 2-4,6-9,12-14 |
| Y | KR 10-2019-0007285 A (LG ELECTRONICS INC.) 22 January 2019 (2019-01-22)<br>See claims 1-4 and figures 12-14. | 1,5,10,11,15 |
| Y | KR 10-2013-0050482 A (HYUN, Ji Young) 16 May 2013 (2013-05-16)<br>See paragraphs [0024] and [0057] and figures 1-3 and 11. | 5,10,15 |
| A | KR 10-2341703 B1 (QURIBO CO., LTD. et al.) 21 December 2021 (2021-12-21)<br>See claim 1 and figures 1-6. | 1-15 |
| A | KR 10-2023-0133134 A (SAMSUNG HEAVY IND. CO., LTD.) 19 September 2023 (2023-09-19)<br>See claims 1-4 and figures 3-8. | 1-15 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 February 2025** | **12 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/016489**

| Patent document cited in search report | | | Publication date (day/month/year) | Patent family member(s) | | | Publication date (day/month/year) |
|---|---|---|---|---|---|---|---|
| JP | 2023-146351 | A | 12 October 2023 | None | | | |
| KR | 10-2019-0007285 | A | 22 January 2019 | EP | 3428761 | A1 | 16 January 2019 |
| | | | | EP | 3428761 | B1 | 02 December 2020 |
| | | | | US | 10967512 | B2 | 06 April 2021 |
| | | | | US | 2019-0015985 | A1 | 17 January 2019 |
| KR | 10-2013-0050482 | A | 16 May 2013 | None | | | |
| KR | 10-2341703 | B1 | 21 December 2021 | KR 10-2021-0111013 | | A | 10 September 2021 |
| KR | 10-2023-0133134 | A | 19 September 2023 | None | | | |

Form PCT/ISA/210 (patent family annex) (July 2022)